# EUROPEAN PATENT APPLICATION

(11) **EP 4 047 835 A1**
(43) Date of publication of application: **24.08.2022**
(21) Application number: 22156813.2
(22) Date of filing: 15.02.2022
(51) Int. Cl.: H04B 10/079, H04B 10/272, H04B 10/40, H04B 10/572, H04J 14/02

(54) **AUTOMATIC WAVELENGTH SETTING SYSTEM FOR OPTICAL COMMUNICATION DEVICE**

(30) Priority: 18.02.2021 KR 20210021537
(71) Applicant: SOLiD Inc., Seongnam-si, Gyeonggi-do (KR)
(72) Inventor: KIM, Kyung Min, Gyeonggi-do 13493 (KR); PARK, Bum Soo, Gyeonggi-do 13493 (KR)
(74) Representative: Frenkel, Matthias Alexander

(57) **Abstract**

An automatic wavelength setting system for an optical communication device includes: an optical transceiver included in the optical communication device, the optical transceiver configured to generate and transmit first transmission light corresponding to a first wavelength, to analyze power of first reception light received after the transmission of the first transmission light, and when it is determined that the first transmission light is received as a result of the analysis, to generate and transmit second transmission light corresponding to a second wavelength; and an optical reflector, which is formed between the optical transceiver and a multiplexer, configured to transmit the first transmission light to the connected multiplexer when the first transmission light is an optical signal of a set wavelength, and to reflect and retransmit the first transmission light to the optical transceiver when the first transmission light is not the optical signal of the set wavelength.

## Description

### BACKGROUND

### 1. Field

The present disclosure relates to a method and a system for automatically setting a wavelength for communication channel connection between optical communication devices.

### 2. Description of the Related Art

A passive optical network (hereinafter referred to as 'PON') has become the core of FTTH environment implementation and Giga-bit Ethernet implementation. The PON includes an optical line terminal (OLT) of a central office, a Remote Node (RN) to allow multiple subscribers to share one feeder optical cable, and an optical network terminal (ONT) or an optical network unit (ONU) on the subscriber side. An optical cable is connected to an optical transceiver of the OLT and ONT and an optical transceiver of the ONT or ONU, respectively, to connect the OLT to the ONT/ONU. The optical transceiver is for transmitting and receiving an optical signal through an optical cable connected to the optical transceiver, and may be an optical transmission/reception module such as a gigabit interface converter (GBIC), small form-factor pluggable (SFP), and the like.

A separation distance between the OLT and the ONT/ONU is usually several km to several tens km. Therefore, it is very cumbersome and time consuming for an administrator to visit the site and set wavelengths of optical signals that may communicate with each other between the OLT and the ONT/ONU.

### SUMMARY

Provided are methods of automatically setting wavelengths of optical signals between optical communication devices without an administrator's visit.

Additional aspects will be set forth in part in the description which follows and, in part, will be apparent from the description, or may be learned by practice of the presented embodiments.

According to an aspect of an embodiment, an automatic wavelength setting system for an optical communication device comprising: an optical transceiver included in the optical communication device, the optical transceiver configured to generate and transmit first transmission light corresponding to a first wavelength, to analyze power of first reception light received after the transmission of the first transmission light, and when it is determined that the first transmission light is received as a result of the analysis, to generate and transmit second transmission light corresponding to a second wavelength; and an optical reflector, which is formed between the optical transceiver and a multiplexer, configured to transmit the first transmission light to the connected multiplexer when the first transmission light is an optical signal of a set wavelength, and to reflect and retransmit the first transmission light to the optical transceiver when the first transmission light is not the optical signal of the set wavelength.

According to an exemplary embodiment, the optical transceiver repeatedly transmits the first transmission light according to a preset period, and determines that the first transmission light is received when power of the first reception light is repeatedly changed.

According to an exemplary embodiment, the optical transceiver determines that the first transmission light is received when the change in the power of the first reception light corresponds to the period.

According to an exemplary embodiment, the optical reflector comprises: a reflector configured to reflect and output the first transmission light when the first transmission light does not correspond to the set wavelength; and a coupler configured to transmit the first transmission light input from the reflector to the optical transceiver, and when the first transmission light does not correspond to the set wavelength, the first reception light includes the first transmission light.

According to an exemplary embodiment, the coupler transmits the first reception light obtained by combining external light received from an external optical communication device through the multiplexer and the first transmission light input from the reflector to the optical transceiver.

According to an aspect of an embodiment, an optical communication system comprising: an optical communication device including an optical transceiver, the optical transceiver configured to generate and transmit first transmission light corresponding to a first wavelength, to analyze power of first reception light received after the transmission of the first transmission light, and when it is determined that the first transmission light is received as a result of the analysis, to generate and transmit second transmission light corresponding to a second wavelength; and a multiplexer configured to transmit the first transmission light to a connected external optical communication device when the first transmission light is an optical signal of a set wavelength, and to reflect and retransmit the first transmission light to the optical transceiver when the first transmission light is not the optical signal of the set wavelength.

According to an exemplary embodiment, the optical transceiver repeatedly transmits the first transmission light according to a preset period, and determines that the first transmission light is received when power of the first reception light is repeatedly changed.

According to an exemplary embodiment, the optical transceiver determines that the first transmission light is received when the change in the power of the first reception light corresponds to the period.

According to an exemplary embodiment, the multiplexer comprises: a reflector configured to reflect and output the first transmission light when the first transmission light does not correspond to the set wavelength; and a coupler configured to retransmit the first transmission light input from the reflector to the optical transceiver, and when the first transmission light does not correspond to the set wavelength, the first reception light includes the first transmission light.

According to an exemplary embodiment, the coupler transmits the first reception light obtained by combining external light received from the external optical communication device and the first transmission light input from the reflector to the optical transceiver.

### BRIEF DESCRIPTION OF THE DRAWINGS

These and/or other aspects will become apparent and more readily appreciated from the following description of the embodiments, taken in conjunction with the accompanying drawings in which:
FIG. 1 is a configuration diagram of an optical communication system according to an embodiment;
FIG. 2 is a block diagram of an optical communication system according to an embodiment;
FIG. 3 is a block diagram of an optical module and an optical reflector according to an embodiment; and
FIG. 4 is a flowchart illustrating an automatic optical wavelength setting operation according to an embodiment.

### DETAILED DESCRIPTION

Since the disclosure may have diverse modified embodiments, preferred embodiments are illustrated in the drawings and are described in the detailed description. However, this is not intended to limit the disclosure to particular modes of practice, and it is to be appreciated that all changes, equivalents, and substitutes that do not depart from the technical scope of the disclosure are encompassed in the disclosure.

In the description of the disclosure, certain detailed explanations of the related art are omitted when it is deemed that they may unnecessarily obscure the essence of the disclosure. In addition, numeral figures (e.g., first, second, and the like) used during describing the specification are just identification symbols for distinguishing one element from another element.

Further, in the specification, if it is described that one component "is connected to" or "accesses" the other component, it is understood that the one component may be directly connected to or may directly access the other component but unless explicitly described to the contrary, another component may be "connected" or "access" between the components.

In addition, terms including "unit," "er," "or," "module," and the like disclosed in the specification mean a unit that processes at least one function or operation and this may be implemented by hardware or software such as a processor, a micro processor, a micro controller, a central processing unit (CPU), a graphics processing unit (GPU), an accelerated Processing unit (APU), a digital signal processor (DSP), an application specific integrated circuit (ASIC), and a field programmable gate array (FPGA) or a combination of hardware and software.

In addition, it is intended to clarify that the division of the components in the specification is only made for each main function that each component is responsible for. That is, two or more components to be described later below may be combined into one component, or one components may be divided into two or more components according to more subdivided functions. In addition, it goes without saying that each of the components to be described later below may additionally perform some or all of the functions of other components in addition to its own main function, and some of the main functions that each of the components is responsible for may be dedicated and performed by other components.

Hereinafter, various embodiments will be described in detail in order.

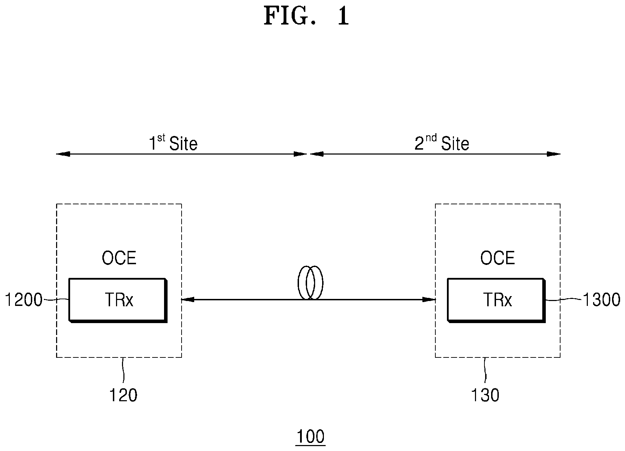

FIG. 1 is a configuration diagram of an optical communication system according to an embodiment.

Referring to FIG. 1, an optical communication system 100 according to an embodiment may include a first optical communication device 120 and a second optical communication device 130. In FIG. 1, only one second optical communication device 130 is illustrated for convenience of description, but the inventive concept is not limited thereto.

The first optical communication device 120 may be located on the side of a first site (1^{st} Site), and may include at least one optical transceiver 1200. In addition, the second optical communication device 130 may be located at a second site (2^{nd} Site) apart from the first site by a certain distance, and may include at least one optical transceiver 1300. The first optical communication device 120 and the second optical communication device 130 may be communicatively connected to each other through respective optical transceivers and an optical cable connecting them.

In some embodiments, the optical communication system 100 may be applied to an optical subscriber network. In this case, the first optical communication device 120 may be an optical line terminal (OLT) at a central office side. In addition, the second optical communication device 130 may be any one of a remote terminal (RT), an optical network terminal (ONT) at a subscriber side, and an optical network unit.

In another embodiment, the optical communication system 100 may be applied to a fronthaul transmission network of a distributed base station. In this case, the first optical communication device 120 may be a digital unit (DU) at the central office side or a termination device at a baseband unit (BBU) side. In addition, the second optical communication device 130 may be a remote unit (RU) or a remote radio head (RRH).

In another embodiment, the optical communication system 100 may be applied to a distributed antenna system (DAS) for solving a shadow area of a base station. In this case, the first optical communication device 120 may be a headend unit, and the second optical communication device 130 may be an extension unit or a remote unit.

As described above, the optical communication system 100 according to the inventive concept may be applied to various optical communication networks implemented by optical communication devices that are located remotely from each other and transmit and receive optical signals through corresponding optical transceivers.

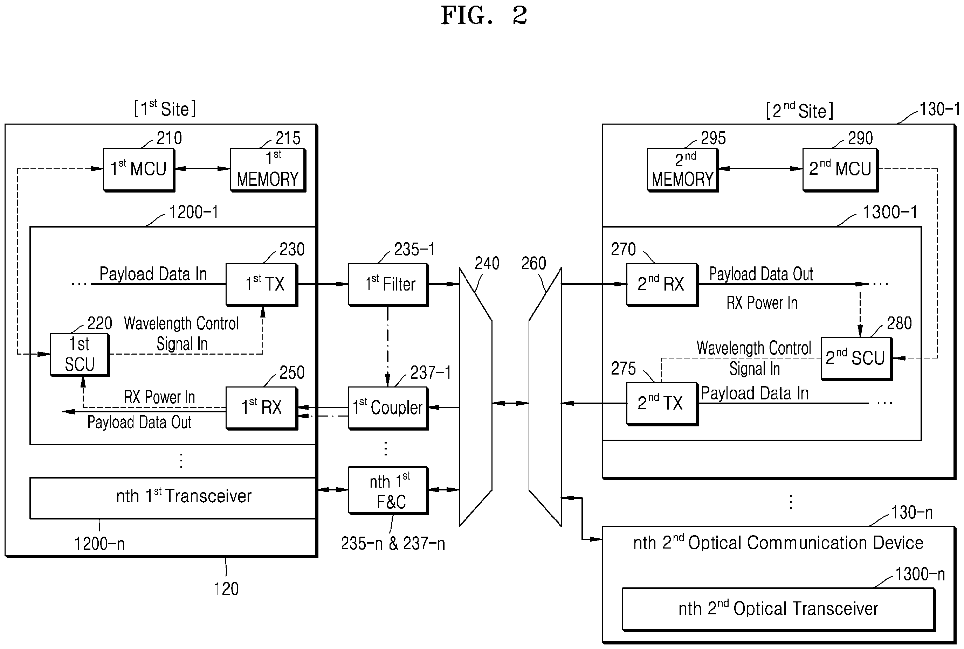

Hereinafter, an 'optical wavelength automatic setting operation' between the first optical communication device 120 and the second optical communication device 130 in the optical communication system 100 according to an embodiment will be described in detail with reference to FIGS. 2 to 4.

FIG. 2 is a block diagram illustrating in more detail a main portion of an optical transceiver in an optical communication system according to an embodiment.

It should be noted that FIG. 2 shows the main portion of the optical transceiver in more detail on the assumption that the optical communication system 100 of FIG. 1 is applied to a WDM-PON. In addition, a solid arrow shown in FIG. 2 may indicate a moving path of payload data, a dotted arrow may indicate a moving path of sub management data (e.g., auxiliary management and control channel (AMCC) data), and a dashed-dotted arrow may indicate a moving path of an optical signal that is reflected and received after being transmitted from the optical transceiver.

Referring to FIG. 2, among a plurality of optical communication devices constituting the optical communication system 100 according to an embodiment, the first optical communication device 120 may include the first main control unit (MCU) 210 and n first optical transceivers 1200-1 to 1200-n (where n is a natural number of 2 or more).

Each of the n first optical transceivers 1200-1 to 1200-n may include a first sub control unit (SCU) 220, a first transmitter 230, and a first receiver 250. The n first optical transceivers 1200-1 to 1200-n may be connected to a first multiplexer (MUX) 240 to transmit an optical signal to the first MUX 240 or may receive an optical signal of a corresponding wavelength band from the first MUX 240.

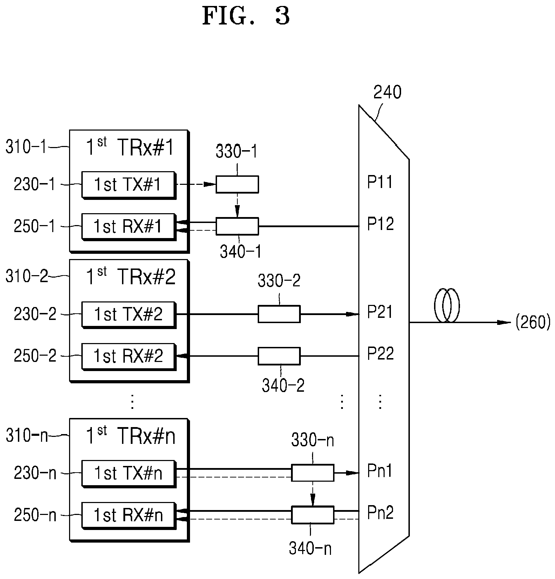

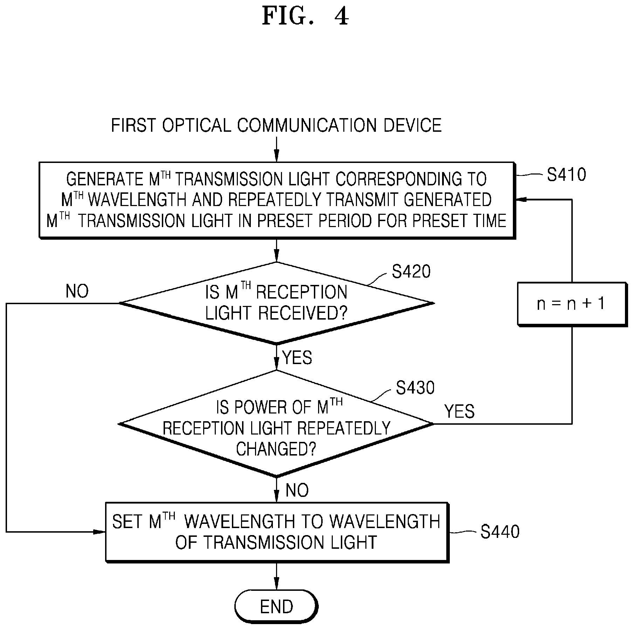

In this case, an optical signal transmitted from the first transmitter 230 may be transmitted to the first MUX 240 through a first filter 235-1. The first filter 235-1 may be set to transmit only an optical signal of a preset wavelength to the first MUX 240. Accordingly, when a wavelength of the optical signal transmitted from the first transmitter 230 corresponds to a wavelength set in the first filter 235-1, the wavelength of the optical signal may be transmitted to the first MUX 240. Otherwise, the optical signal may be output to a first coupler 237-1 and input again to the first receiver 250. A detailed description thereof will be described later with reference to FIGS. 3 and 4.

In addition, among a plurality of optical communication devices constituting the optical communication system 100 according to an embodiment, n second optical communication devices 130-1 to 130-n may include corresponding optical transceivers among n second optical transceivers 1300-1 to 1300-n, respectively.

Each of the n second optical transceivers 1300-1 to 1300-n may include a second sub control unit 280, a second receiver 270, and a second transmitter 275. The n second optical transceivers 1300-1 to 1300-n may be connected to a second MUX 260 to transmit an optical signal to the second MUX 260 or may receive an optical signal from the second MUX 260.

According to an embodiment, the first MUX 240 on the first optical communication device 120 side may be a separate device separated from the first optical communication device 120 or may be a component provided inside the first optical communication device 120. In addition, the second MUX 260 may be a separate device from the n second optical communication devices 130-1 to 130-n, but may be configured in plural and may be provided inside the n second optical communication devices 130-1 to 130-n, respectively. In this case, the n second optical communication devices 130-1 to 130-n may include a plurality of optical transceivers, respectively.

According to an embodiment, the first optical communication device 120, the first MUX 240, and the second MUX 260 may be connected to each other in a ring topology. In addition, according to an embodiment, a plurality of sub-multiplexers may be connected to the second MUX 260, and a tree topology may be formed in such a way that the second optical communication devices 130-1 to 130-n are connected to the sub-multiplexers.

First, the first MCU 210 may be configured to control the operation of the first optical communication device 120. The first MCU 210 may be connected to an external device such as a server or a network monitoring system (NMS) to transmit/receive information and data necessary for the operation of the first optical communication device 120.

The first memory 215 is a space in which program instructions and various types of information necessary for the operation of the first optical communication device 120 are stored, and may include a data storage medium such as a magnetic disk or a solid-state drive (SSD).

The first sub control unit 220 is configured to be wired or wirelessly connected to the first MCU 210, and may manage and control the first optical transceiver 1200-1. The first sub control unit 220 may process payload data transmission/reception and control management (wavelength setting/control, communication state monitoring, etc.) between the first optical transceiver 1200-1 and the second optical transceiver 1300-1. The first sub control unit 220 is an active configuration of the first optical transceiver 1200-1, and may be a term that collectively refers to a processor for performing various control and processing, a memory in which firmware, etc. are stored for transmission of first sub management data of low speed through an sub management and control channel together with high-speed payload data.

On the other hand, when an optical signal transmitted from the first optical transceiver 1200-1 does not pass through the first filter 235-1, the first sub control unit 220 may change a wavelength of the optical signal and control the optical signal to be transmitted again. A detailed description in this regard will also be described later with reference to FIGS. 3 and 4.

The first transmitter 230 is configured to convert received payload data and/or first sub management data into an optical signal. The first transmitter 230 may include a transmitter optical sub-assemblies (TOSA) made of a laser diode, laser diode driving circuitry (LDD), biasing circuitry, and the like. Payload data input to the first transmitter 230 may be input through the LDD. In particular, the first transmitter 230 may generate first transmission light. The first transmission light may include a first test optical signal and a first downstream wavelength optical signal. The first test optical signal may be obtained by the first transmitter 230 converting test information into an optical signal. The first downstream wavelength optical signal may be obtained by the first transmitter 230 converting the first downstream wavelength information into an optical signal. The first test optical signal and the first downstream wavelength optical signal may be combined into the first transmission light, but may be transmitted to the outside through different channels and wavelengths. This is because the first downstream wavelength optical signal is an optical signal corresponding to an AMCC.

The first transmitter 230 may output the first transmission light to the first MUX 240. The first transmitter 230 may determine a wavelength of the first transmission light under the control of the first sub control unit 220. For example, it is assumed that the wavelength of the first transmission light is preset to a first wavelength. In this case, the first transmitter 230 may change the wavelength of the first transmission light to a second wavelength according to a control signal received from the first sub control unit 220. That is, the first sub control unit 220 may vary a wavelength of an optical signal of the first transmitter 230.

The first MUX 240 may be configured to multiplex an optical signal input from the first transmitter 230 and transmit the optical signal through an optical cable, and to demultiplex signals received from the optical cable.

The first receiver 250 may divide an optical signal input after being demultiplexed in the first MUX 240 into payload data and second sub management data (the definition of the second sub management data will be described later below) and output the payload data and the second sub management data in corresponding configurations, respectively. In particular, the first receiver 250 may output the second sub management data to the first sub control unit 220. The first receiver 250 may include a photo diode, receiver optical sub-assemblies (ROSA) including a trans-impedance amplifier (TIA), a post amplifier, and the like.

In the above, the configuration of the first optical transceiver 1200-1 from among the n first optical transceivers 1200-1 to 1200-n has been described. Configurations of the remaining first optical transceivers 1200-2 to 1200-n are substantially the same as that of the first optical transceiver 1200-1, so a description thereof will be omitted.

The second sub control unit 280 of the second optical transceiver 1300-1 may be configured to control the operation of the second optical transceiver 1300-1.

The second sub control unit 280 may manage transmission/reception of payload data between the first optical transceiver 1200-1 and the second optical transceiver 1300-1 and transmission/reception of information (hereinafter referred to as second sub management data) for management and control (wavelength setting, communication state monitoring, etc.). The second sub control unit 280 may transmit payload data and second sub management data to the first optical transceiver 1200-1 according to various methods. Like the first sub control unit 220, the second sub control unit 280 may transmit the second sub management data to the first optical transceiver 1200-1 without affecting the payload data through various methods. The second sub control unit 280 is an active configuration of the second optical transceiver 1300-1, and may collectively refer to a processor that processes and controls information that can be transmitted and received through a sub management and control channel, a memory in which firmware, etc. are stored, and the like.

The second receiver 270 may be configured to correspond to the first receiver 250, and the second transmitter 275 may be configured to correspond to the first transmitter 230.

The payload data and the second sub management data transmitted to the first optical transceiver 1200-1 through the second transmitter 275 and the second MUX 260 may be converted into an optical signal and multiplexed. An optical signal received from the first optical transceiver 1200-1 through the second MUX 260 and the second receiver 270 may be demultiplexed and converted into an electrical signal.

In the above, all functions of respective components of the first and second optical transceivers 1200-1 and 1300-1 have been described. Hereinafter, an automatic wavelength setting operation for establishing a communication channel between the n first optical transceivers 1200-1 to 1200-n will be described in detail with reference to FIGS. 3 and 4.

FIG. 3 is a block diagram of an optical module and an optical reflector according to an embodiment. A solid arrow shown in FIG. 3 may indicate an optical signal transmitted to or received from the first MUX 240, and a dotted arrow may indicate an optical signal that has not been transmitted to the first MUX 240.

Referring to FIG. 3, each of n first optical transceivers, that is, each of a 1^{st}-1^{st} optical transceiver 310-1 to a 1^{st}-n^{th} optical transceiver 310-n may be connected to the first MUX 240. At this time, each of the first optical transceivers 310-1 to 310-n may be connected to the first MUX 240 through corresponding filters 330-1 to 330-n and couplers 340-1 to 340-n.

A 1^{st}-1^{st} transmitter 230-1 of the 1^{st}-1^{st} optical transceiver 310-1 may be connected to a first transmission port P11 of the first MUX 240 through the first filter 330-1, and a 1^{st}-1^{st} receiver 250-1 may be connected to a first reception port P12 of the first MUX 240 through the first coupler 340-1. A 1^{st}-2^{nd} transmitter 230-2 of the 1^{st}-2^{nd} optical transceiver 310-2 may be connected to a second transmission port P21 of the first MUX 240 through the second filter 330-2, and a 1^{st}-2^{nd} receiver 250-2 may be connected to a second reception port P22 of the first MUX 240 through the second coupler 340-2. Similarly, a 1^{st}-n^{th} transmitter 230-n of the 1^{st}-n^{th} optical transceiver 310-n may be connected to an n^{th} transmission port Pn1 of the first MUX 240 through the n^{th} filter 330-n, and a 1^{st}-n^{th} receiver 250-n may be connected to an n^{th} reception port Pn2 of the first MUX 240 through the n^{th} coupler 340-n.

In FIG. 3, a case in which first transmission light transmitted from the 1^{st}-1^{st} transmitter 230-1 does not pass through the first filter 330-1 and is retransmitted to the 1^{st}-1^{st} receiver 250-1 through the first coupler 340-1 is exemplified. In addition, in FIG. 3, a case in which second transmission light transmitted from the 1^{st}-2^{nd} transmitter 230-2 passes through the second filter 330-2 is transmitted to the second transmission port P21 of the first MUX 240 is exemplified. Because the example of FIG. 3 is merely an embodiment for understanding and explanation, it is obvious that the embodiment cannot limit the scope of the disclosure. That is, the first transmission light is transmitted to the first transmission port P11 and the second transmission light does not pass through the second filter 330-2, and thus the second transmission light may be retransmitted to the 1^{st}-2^{nd} receiver 250-2 through the second coupler 340-2.

First, the 1^{st}-1^{st} transmitter 230-1 may generate first transmission light having a preset wavelength (hereinafter referred to as a 'set wavelength'). In addition, the 1^{st}-1^{st} transmitter 230-1 may transmit the first transmission light to the first filter 330-1. It is assumed that a wavelength of the first transmission light is a first wavelength. In this case, the 1^{st}-1^{st} transmitter 230-1 may generate the first transmission light corresponding to the first wavelength in a preset period (e.g., 0.5 [sec]) and repeatedly output the first transmission light for a preset time (e.g., 0.1 [sec]).

The first filter 330-1 is configured to filter only a preset optical signal, and may transmit a filtered optical signal to the first transmission port P11 of the first MUX 240. It is assumed that a wavelength set to be filtered by the first filter 330-1 is a second wavelength. Accordingly, the first filter 330-1 may not filter the first transmission light corresponding to the first wavelength.

In addition, the first filter 330-1 may include a reflector (e.g., mirror) (not shown) for outputting an unfiltered optical signal to the first coupler 340-1. Accordingly, the first filter 330-1 may output the first transmission light to the first coupler 340-1 through the reflector.

The first coupler 340-1 may generate first reception light by combining the first transmission light input from the first filter 330-1 and external light. The external light is an optical signal transmitted from an external optical communication device (e.g., the second optical communication device 130-n), and may be an optical signal received at the first reception port P12 of the first MUX 240. The first coupler 340-1 may transmit the first reception light to the 1^{st}-1^{st} receiver 250-1.

The 1^{st}-1^{st} receiver 250-1 may measure power of first reception light when the first reception light is received. For example, the 1^{st}-1^{st} receiver 250-1 may measure optical power of the first reception light (hereinafter referred to as 'first optical power'). Alternatively, the 1^{st}-1^{st} receiver 250-1 may convert the first reception light into an electrical signal and then measure voltage of the converted electrical signal (hereinafter referred to as 'first voltage'). The 1^{st}-1^{st} receiver 250-1 may output the first optical power and/or the first voltage to the first sub control unit 220.

The first sub control unit 220 may analyze whether the first transmission light is included in the first reception light using the first optical power and/or the first voltage. As described above, because the first transmission light is repeatedly transmitted for a preset time in a preset period, when the first transmission light is included in the first reception light without being filtered, the first reception light will also be repeatedly changed in a preset period for a preset time. Therefore, the first sub control unit 220 may analyze whether the first reception light is received and, if received, repeatedly changes in a preset pattern.

That is, when the first reception light is not received (until the threshold time elapses), both the external light and the first transmission light are not received, so the first sub control unit 220 may analyze that the first transmission light is transmitted to the first MUX 240 through the first filter 330-1.

On the other hand, when the first reception light is received (until the threshold time elapses), it may be a case in which only the external light is received or both the external light and the first transmission light are received. Accordingly, the first sub control unit 220 may analyze whether the first reception light repeatedly changes in a preset pattern. Because of the analysis, when the first reception light repeatedly changes in a preset pattern, the first sub control unit 220 may determine that the first transmission light is received. Alternatively, because of the analysis, when the first reception light does not repeatedly change in a preset pattern, the first sub control unit 220 may determine that the first transmission light is not received.

When it is determined that the first transmission light is included in the first reception light, the first sub control unit 220 may change setting of the 1^{st}-1^{st} transmitter 230-1 so that the second transmission light corresponding to the second wavelength is generated. Accordingly, the 1^{st}-1^{st} transmitter 230-1 may generate the second transmission light corresponding to the second wavelength. It is obvious that the 1^{st}-1^{st} transmitter may include a configuration capable of varying transmission light.

Thereafter, the 1^{st}-1^{st} transmitter 230-1 may repeatedly transmit the second transmission light in a preset period for a preset time. Because the second transmission light is an optical signal having a wavelength set in the first filter 330-1, the second transmission light may be transmitted to the first transmission port P11 of the first MUX 240 through the first filter 330-1.

However, the operation of the 1^{st}-2^{nd} optical transceiver 310-2 to the 1^{st}-n^{th} optical transceiver 310-n may be similar to the operation of the 1^{st}-1^{st} optical transceiver 310-1 described above, so a detailed description of the operation thereof will be omitted.

As described above, the optical communication system 100 according to the present disclosure may include an optical reflector (i.e., collectively referred to as the filter 330-n and the coupler 340-n) corresponding to each of the optical transceivers to automatically set a transmission wavelength by passing only an optical signal of a preset wavelength and sending other optical signals back to the optical transceiver. The present disclosure may be easily applied to an existing optical communication system because automatic transmission wavelength setting is possible without adding a separate configuration to an optical transceiver and a multiplexer.

In the above description, it is assumed that the optical reflectors 330-n and 340-n are formed between the optical transceivers 310-1 to 310-n and the first MUX 240. That is, the optical reflectors 330-n and 340-n are described on the assumption that they are formed outside the first MUX 240. However, the optical reflectors 330-n and 340-n may be formed inside the first MUX 240. In this case, the configuration of the optical reflectors 330-n and 340-n described with reference to FIG. 3 (i.e., a filter and a mirror connected to a transmission port, and a coupler connected to a reception port) may be formed inside the first MUX 240.

In the configuration in which the optical reflectors 330-n and 340-n are formed inside the first MUX 240, only the formation position of the optical reflectors 330-n and 340-n is different, and thus a separate detailed description thereof will be omitted.

FIG. 4 is a flowchart illustrating an automatic optical wavelength setting operation according to an embodiment.

Hereinafter, an operation of automatically setting an optical wavelength according to an embodiment will be described with reference to FIG. 4. Operations to be described below may be operations respectively performed in configurations of the first optical communication device 120 described with reference to FIGS. 2 and 3, but are collectively described as being performed in the first optical communication device 120 for convenience of understanding and description. Referring to FIG. 4, an operation of automatically setting an optical wavelength of the optical communication system 100 according to an embodiment may be more easily understood.

In operation S410, the first optical communication device 120 may generate m^{th} transmission light corresponding to an m^{th} wavelength (m is a natural number). The first optical communication device 120 may repeatedly transmit the generated m^{th} transmission light in a preset period for a preset time. The repeatedly transmitted m^{th} transmission light may be transmitted to a connected optical reflector. The optical reflector may be set to filter only an optical signal of a preset wavelength.

In operation S420, the first optical communication device 120 may determine whether m^{th} reception light is received in response to the transmission of the m^{th} transmission light. When the m^{th} reception light is not received, it may mean that the m^{th} transmission light is filtered by the optical reflector and transmitted to the first MUX 240.

In operation S430, when the m^{th} reception light is received, the first optical communication device 120 may analyze whether power of the m^{th} reception light is repeatedly changed. The first optical communication device 120 may measure optical power of the m^{th} reception light or convert the m^{th} reception light into an electrical signal and then measure a voltage of the converted electrical signal. When the measured power of the m^{th} reception light does not change repeatedly, the first optical communication device 120 may determine that the m^{th} transmission light is filtered by the optical reflector and transmitted to the first MUX 240. Because the m^{th} transmission light is repeatedly transmitted for a preset time in a preset period, when the m^{th} reception light includes the m^{th} transmission light, the m^{th} reception light needs to be repeatedly changed like the m^{th} transmission light.

When the power of the m^{th} reception light is repeatedly changed, the first optical communication device 120 may generate and transmit (m+1)^{th} transmission light of (m+1)^{th} wavelength. That is, the first optical communication device 120 may change and transmit a wavelength of transmission light until the repeatedly changed m^{th} reception light is not received.

In operation S440, when the m^{th} reception light is not received or the power of the m^{th} reception light is not repeatedly changed, the first optical communication device 120 may set the m^{th} wavelength to the wavelength of the transmission light.

As described above, in the optical communication system 100 according to an embodiment, even if a plurality of wavelength-variable optical modules are included, an optical signal having a wavelength corresponding to these optical modules may be automatically set without an administrator's visit.

In this case, because there is no need to add a separate configuration to the optical transceiver and/or the MUX, it is possible to implement the optical communication system 100 according to an embodiment using conventional devices, which may be economical.

An optical communication system according to the disclosure may automatically set a wavelength for a communicable optical signal without an administrator's visit.

In addition, the optical communication system according to the disclosure may automatically set a wavelength for an optical signal without adding a separate device to an optical transceiver and/or a multiplexer.

Effects obtainable by the embodiments of the inventive concept are not limited to the effects described above, and other effects not described herein may be clearly understood by one of ordinary skill in the art to which the inventive concept belongs from the following description.

While the embodiments have been particularly shown and described, it will be understood by one of ordinary skill in the art that various changes in form and details may be made therein without departing from the scope of the disclosure as defined by the appended claims.

## Claims

1. An automatic wavelength setting system for an optical communication device, the automatic wavelength setting system comprising:
an optical transceiver included in the optical communication device, the optical transceiver configured to generate and transmit first transmission light corresponding to a first wavelength, to analyze power of first reception light received after the transmission of the first transmission light, and when it is determined that the first transmission light is received as a result of the analysis, to generate and transmit second transmission light corresponding to a second wavelength; and
an optical reflector, which is formed between the optical transceiver and a multiplexer, configured to transmit the first transmission light to the connected multiplexer when the first transmission light is an optical signal of a set wavelength, and to reflect and retransmit the first transmission light to the optical transceiver when the first transmission light is not the optical signal of the set wavelength.

2. The automatic wavelength setting system of claim 1, wherein the optical transceiver repeatedly transmits the first transmission light according to a preset period, and determines that the first transmission light is received when power of the first reception light is repeatedly changed.

3. The automatic wavelength setting system of claim 1 or 2, wherein the optical transceiver determines that the first transmission light is received when the change in the power of the first reception light corresponds to the period.

4. The automatic wavelength setting system of any one of claims 1 to 3, wherein the optical reflector comprises:
a reflector configured to reflect and output the first transmission light when the first transmission light does not correspond to the set wavelength; and
a coupler configured to transmit the first transmission light input from the reflector to the optical transceiver,
wherein, when the first transmission light does not correspond to the set wavelength, the first reception light includes the first transmission light.

5. The automatic wavelength setting system of claim 4, wherein the coupler transmits the first reception light obtained by combining external light received from an external optical communication device through the multiplexer and the first transmission light input from the reflector to the optical transceiver.

6. An optical communication system comprising:
an optical communication device including an optical transceiver, the optical transceiver configured to generate and transmit first transmission light corresponding to a first wavelength, to analyze power of first reception light received after the transmission of the first transmission light, and when it is determined that the first transmission light is received as a result of the analysis, to generate and transmit second transmission light corresponding to a second wavelength; and
a multiplexer configured to transmit the first transmission light to a connected external optical communication device when the first transmission light is an optical signal of a set wavelength, and to reflect and retransmit the first transmission light to the optical transceiver when the first transmission light is not the optical signal of the set wavelength.

7. The optical communication system of claim 6, wherein the optical transceiver repeatedly transmits the first transmission light according to a preset period, and determines that the first transmission light is received when power of the first reception light is repeatedly changed.

8. The optical communication system of claim 6 or 7, wherein the optical transceiver determines that the first transmission light is received when the change in the power of the first reception light corresponds to the period.

9. The optical communication system of any one of claims 6 to 8, wherein the multiplexer comprises:
a reflector configured to reflect and output the first transmission light when the first transmission light does not correspond to the set wavelength; and
a coupler configured to retransmit the first transmission light input from the reflector to the optical transceiver,
wherein, when the first transmission light does not correspond to the set wavelength, the first reception light includes the first transmission light.

10. The optical communication system of claim 9, wherein the coupler transmits the first reception light obtained by combining external light received from the external optical communication device and the first transmission light input from the reflector to the optical transceiver.
